# EUROPEAN PATENT APPLICATION

(11) **EP 0 720 038 A2**
(43) Date of publication of application: **03.07.1996**
(21) Application number: 95309270.7
(22) Date of filing: 20.12.1995
(51) Int. Cl.: G02F 1/1335

(54) **Liquid crystal display**

(30) Priority: 26.12.1994 KR 9436910
(71) Applicant: Samsung Electronics Co., Ltd., Suwon-city, Kyungki-do 441-370 (KR)
(72) Inventor: Lee, Si-Hyun, ChangAn-gu, Suwon-city, Kyungki-do (KR)
(74) Representative: Neill, Alastair William

(57) **Abstract**

A liquid crystal display with color (red, green and blue) filters (3) and a black matrix (2) formed on different surfaces is disclosed. This LCD increases the area ratio of the color filters, reduces the gap between the color filters and improves the aperture efficiency of both the color filters and the black matrix. In the above LCD, the black matrix forms an electrode structure together with ITO drive electrodes (4) as the black matrix of low-resistance chrome and ITO electrodes are formed on the same surface and electrically connected to each other. The resistance of the ITO electrodes is set by the chrome's resistance of the matrix. The above LCD thus appropriately manages the electrode's resistance by the matrix's resistance even when the ITO electrodes have a somewhat high resistance.

## Description

The present invention relates in general to liquid crystal displays and, more particularly, to a structural improvement in such liquid crystal displays for forming a black matrix and ITO drive electrodes into an electrode structure, for increasing the area ratio of R (red), G (green) and B (blue filters and for improving the aperture efficiency of both the above R, G and B filters and the black matrix. The above structural improvement is achieved by forming both the black matrix of low-resistance chrome and the ITO electrodes on the same surface while separating the black matrix from the R, G and B filters.

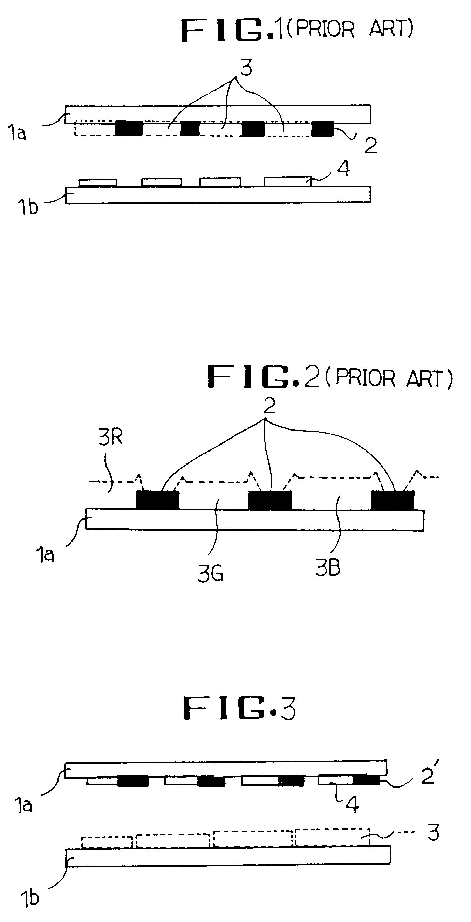

Figure 1 shows a typical liquid crystal display. As shown in the drawing, the typical liquid crystal display (LCD) includes a top glass substrate 1a. Three color filters, that is, R (red), G (green) and B (blue) filters 3, are formed on the bottom surface of the top substrate 1a. Formed between the filters 3 on the top substrate 1a is a black matrix 2. The above LCD also includes a bottom glass substrate 1b opposite from the top substrate 1a. A plurality of ITO (indium tin oxide) drive electrodes 4 are formed on the top surface of the bottom substrate 1b. The above ITO electrodes 4 are aligned with the R, G and B filters 3 of the top substrate 1a, respectively. After preparing the above top and bottom substrates 1a and 1b, liquid crystal is injected between the two substrates 1a and 1b prior to enveloping the two substrates 1a and 1b. When the ITO electrodes 4 of the above LCD are applied with a voltage, the LCD displays a color picture in accordance with intrinsic characteristics of the liquid crystal interposed between the two substrates 1a and 1b.

However, as the ITO drive electrodes 4 formed on the bottom substrate 1b of the above LCD have a high resistance (10Ω/□), it is required to reduce the resistance of the ITO drive electrodes. Additionally, as both the R, G and B filters 3 and the black matrix 2 are formed on the same plane of the top substrate 1a, it is difficult to reduce the area ratio of the black matrix 2 formed on the top substrate 1a. Furthermore, a step having a height of about 0.6µ is formed between the black matrix 2 and the filters 3 regardless of the order of forming the R, G and B filters 3 and the black matrix 2 as shown in Figure 2. It is thus impossible to obtain a desired flatness of a surface formed by both the black matrix 2 and the filters 3.

It is, therefore, an object of the present invention to provide a liquid crystal display which overcomes the above problems by forming color filters, that is, R, G and B filters, and a black matrix on different surfaces, thereby increasing the area ratio of the R, G and B filters, minimizing the width of the black matrix by reducing the gap between the R, G and B filters and the black matrix.

It is another object of the present invention to provide a liquid crystal display which not only allows the black matrix to form an electrode structure together with ITO drive electrodes by forming both the light intercepting black matrix of low-resistance chrome and the ITO electrodes on the same surface while electrically connecting the matrix to the electrodes, but also sets the resistance of the ITO electrodes according to the chrome's resistance of the matrix thereby appropriately managing the electrode's resistance by the matrix's resistance even when the ITO electrodes have a somewhat high resistance.

In aspect, the present invention provides a liquid crystal display whose R, G and B filters and black matrix are separately formed on different glass substrates.

In another aspect, the present invention provides a liquid crystal display whose black matrix if formed of a low-resistance metal such as chrome and formed on the same plane of the ITO drive electrodes while electrically connecting the matrix to the electrodes.

By way of example, a specific embodiment of the invention will now be described, with reference to the accompanying drawings, in which:
Figure 1 is a sectional view showing the construction of a typical prior art liquid crystal display;
Figure 2 is a prior art sectional view showing a step, which is formed between R, G and B filters and a black matrix of the above LCD and deteriorates the flatness of a surface formed by both the filters and the matrix;
Figure 3 is a sectional view showing the construction of an LCD in accordance with a preferred embodiment of the present invention;
Figure 4 is a sectional view showing the construction of a top glass substrate of the LCD of Figure 3; and
Figure 5 is a sectional view showing the relation between the R, G and B filters and the black matrix of this LCD.

Figure 3 shows the construction of a liquid crystal display in accordance with a preferred embodiment of the present invention. As shown in the drawing, the liquid crystal display (LCD) of this invention includes three color filters, that is, R (red), G (green) and B (blue) filters 3 which are formed on the top surface of a bottom glass substrate 1b. The LCD also includes a top glass substrate 1a opposite from the bottom substrate 1b while being parallel to the substrate 1a. On the bottom surface of the above top substrate 1a, a plurality of ITO drive electrodes 4 and a black matrix 2' are formed on the same plane such that the matrix 2' is brought into contact with the electrodes 4. In the operation of the above LCD, the black matrix 2' of the top substrate 1a is arrayed to be aligned with the R, G and B filters 3 of the bottom substrate 1b.

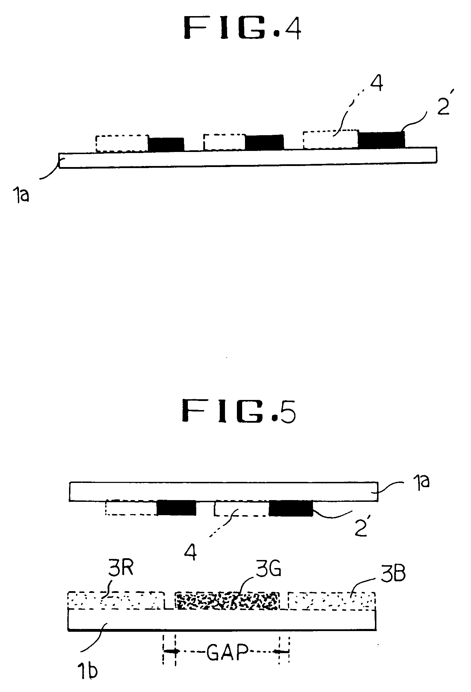

Figure 4 is a sectional view showing the construction of the top glass substrate 1a of the above LCD. The black matrix 2' on the top substrate 1a is formed of low-resistance metal such as chrome. The matrix 2' is brought into direct contact with the ITO drive electrodes 4 thereby forming an electrode structure together with the electrodes 4 which will be applied with external voltage.

Figure 5 is a sectional view showing in detail the relation between the R, G and B filters 3 and the black matrix 2' of the above LCD. As shown in the drawing, it is preferred to size the R, G and B filters 3R, 3G and 3B of the bottom substrate 1b so as to maintain a minimum gap between the three filters 3R, 3G and 3B while increasing the area ratio of the filters. Additionally, it is preferred to minimize the width of the black matrix 2 in accordance with the gap between the R, G and B filters 3R, 3G and 3B. Furthermore, as there is a gap between the R, G and B filters 3R, 3G and 3B of the bottom substrate 1b and the black matrix 2' of the top substrate 1a, it may be preferred to set the thickness of each black matrix 2' according to the gap between the two substrates 1a and 1b thereby improving the aperture efficiency and enlarging the visible angle according to diffraction of light.

The operational effect of the above LCD will be described hereinbelow.

As described above, the R, G and B filters 3 are formed on the top surface of the bottom substrate 1b, while both the ITO drive electrodes 4 and the light intercepting black matrix 2' are formed on the bottom surface of the top substrate 1a which is spaced apart from, and parallel to the bottom substrate 1b. That is, the R, G and B filters 3 and the black matrix 2' are separately formed on different substrates. Therefore, the above LCD is less limited by area when forming the R, G and B filters thereby increasing the area ratio of the R, G and B filters. Additionally, a gap is formed between the R, G and B filters 3 and the black matrix 2' since there is a cell gap of 6-7 µ between the top and bottom glass substrates 1a and 1b. Therefore, the above LCD not only improves the aperture efficiency, but also enlarges the visible angle in accordance with diffraction of light.

Generally, the practically obtained resistivity for the ITO electrodes 4 is 2x10⁻⁴Ωcm. In this case, when the thickness of each ITO electrode 4 is 2000 Å, the surface resistance of the chrome is 1Ω/□. In the present invention, the black matrix 2' of the top glass substrate 1a is thus preferably formed of low-resistance metal such as chrome. In this case, the black matrix 2' is brought into direct contact with the ITO drive electrodes 4 on the same plane so as to alow the black matrix 2' to form an electrode structure together with the ITO electrodes 4. The black matrix 2' is thus turned on by external voltage applied to the ITO electrodes 4. As the resistance of the ITO electrodes 4 is set by the resistance of the chrome of the matrix 2', the LCD appropriately manages the electrode's resistance by the chrome resistance even when either the ITO electrodes 4 have relatively higher resistance or each ITO electrode is thickened.

As the black matrix 2' of the top substrate 1a is aligned with the R, G and B filters 3 of the bottom substrate 1b, the gap between the R, G and B filters is minimized. Therefore, it is possible to minimize the width of the black matrix 2'. As the R, G and B filters 3 and the black matrix 2' are formed on different glass substrates, it is possible to theoretically remove the step formed between the filters 3 and the matrix 2'. In practice, only a negligible step of about 0.1µ, which is included within the process allowance, is formed between them.

As described above, the LCD of the present invention easily achieves low resistance of ITO drive electrodes by forming the black matrix out of low-resistance chrome. Additionally, as the black matrix and the R, G and B filters are formed on different substrates, the aperture efficiency of both the above R, G and B filters and the black matrix is substantially improved. Another advantage of this LCD resides in that it is possible not only to control both the width of the black matrix and the size of the LCD and, but also to achieve the flatness of a surface formed by both the black matrix and the color filters.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A liquid crystal display comprising a plurality of color filters, a black matrix and a plurality of drive electrodes, wherein said color filters and black matrix are formed on different glass substrates facing each other and both said black matrix and said drive electrodes are formed on the same surface such that said matrix is electrically connected to said drive electrodes.

2. The liquid crystal display according to claim 1, wherein said black matrix if formed of a low-resistance metal.

3. The liquid crystal display according to claim 2, wherein said low-resistance metal is chrome.

4. The liquid crystal display according to any one of the preceding claims, in which said colour filters comprise red, green and blue filters.

5. The liquid crystal display according to any one of the preceding claims in which said drive electrodes comprise ITO (indium tin oxide) electrodes.
